# EUROPEAN PATENT APPLICATION

(11) **EP 4 694 437 A1**
(43) Date of publication of application: **11.02.2026**
(21) Application number: 24785077.9
(22) Date of filing: 21.03.2024
(51) Int. Cl.: H04W 72/04, H04L 5/00, H04W 72/50, H04L 27/26, H04W 74/08, H04W 84/12

(54) **METHOD AND DEVICE FOR TRANSMISSION OR RECEPTION IN ENHANCED TRIGGERED TRANSMISSION OPPORTUNITY SHARING PROCEDURE IN WIRELESS LAN SYSTEM**

(30) Priority: 03.04.2023 KR 20230043764
(71) Applicant: LG Electronics Inc., Yeongdeungpo-gu Seoul 07336 (KR)
(72) Inventor: JANG, Insun, Seoul 06772 (KR); CHOI, Jinsoo, Seoul 06772 (KR); BAEK, Sunhee, Seoul 06772 (KR); KIM, Geonhwan, Seoul 06772 (KR)
(74) Representative: Plasseraud IP
(86) International application number: PCT/KR2024/003560
(87) International publication number: WO 2024/210370

(57) **Abstract**

A method and a device for transmission or reception in an enhanced triggered transmission opportunity sharing procedure in a wireless LAN system are disclosed. The method performed by an STA in a wireless LAN system, according to one embodiment of the present disclosure, may comprise the steps of: receiving, from an AP, a trigger frame related to sharing of a TXOP; transmitting, to the AP, a response frame for the trigger frame; and, on the basis of the trigger frame, performing frame exchange with another STA in a time interval allocated to the STA. A TXOP sharing mode subfield included in the trigger frame can be set to a value indicating a TXOP sharing mode for allocating a time interval so that frame exchange is performed between the STA and the other STA. The duration of a frame transmitted in the time interval allocated to the STA can be set on the basis of an end point of the TXOP or an end point of the frame exchange.

## Description

### [TECHNICAL FIELD]

The present disclosure relates to a method and device for transmitting or receiving in an enhanced triggered transmission opportunity (TXOP) sharing procedure in a Wireless Local Area Network (WLAN) system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

A technical object of the present disclosure is to provide a method and device for transmitting or receiving in an enhanced triggered transmission opportunity (TXOP) sharing procedure in a wireless LAN system.

An additional technical object of the present disclosure is to provide a method and device for supporting multiple peer-to-peer (P2P) communications in a triggered transmission opportunity (TXOP) sharing procedure in a wireless LAN system.

An additional technical object of the present disclosure is to provide a method and device for configuring a duration of a frame transmitted and received within a shared triggered transmission opportunity (TXOP).

The technical objects to be achieved by the present disclosure are not limited to the above-described technical objects, and other technical objects which are not described herein will be clearly understood by those skilled in the pertinent art from the following description.

### [Technical Solution]

A method performed by a station (STA) in a wireless LAN system according to an aspect of the present disclosure may comprise: receiving, from an access point (AP), a trigger frame related to sharing of a transmission opportunity (TXOP); transmitting, to the AP, a response frame for the trigger frame; and performing a frame exchange with other STA in a time duration allocated to the STA based on the trigger frame. Herein, a TXOP sharing mode subfield included in the trigger frame may be set to a value indicating a TXOP sharing mode for allocating a time duration to perform the frame exchange between the STA and the other STA. In this case, a duration of a frame transmitted in the time duration allocated to the STA may be set based on an end timing of the TXOP or an end timing of the frame exchange.

A method performed by an access point (AP) in a wireless LAN system according to an additional aspect of the present disclosure may comprise: receiving, to a plurality of stations (STAs), a trigger frame related to sharing of a transmission opportunity (TXOP); and receiving, from one or more STAs among the plurality of STAs, a response frame for the trigger frame. Herein, a TXOP sharing mode subfield included in the trigger frame may be set to a value indicating a TXOP sharing mode for allocating a time duration to perform the frame exchange between the STA and the other STA. In this case, a duration of a frame transmitted in the time duration allocated to the STA may be set based on an end timing of the TXOP or an end timing of the frame exchange.

### [Technical Effects]

According to the present disclosure, a method and device for transmitting or receiving in an enhanced triggered transmission opportunity sharing procedure in a wireless LAN system may be provided.

According to the present disclosure, a method and device for supporting multiple P2P communications in a triggered transmission opportunity sharing procedure in a wireless LAN system may be provided.

According to the present disclosure, a method and device for performing P2P communications by multiple stations (STAs) according to requirements in a wireless LAN system may be provided.

According to the present disclosure, P2P transmission may be performed in a triggered transmission opportunity sharing mode for multiple users/stations in any case where a network allocation vector (NAV) can be set.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 is a diagram illsutrating an exemplary format of a trigger frame to which the present disclosure may be applied.
FIG. 9 is a diagram for explaining an example of a triggered TXOP sharing procedure to which the present disclosure may be applied.
FIG. 10 is a diagram for explaining an operation of an STA in a triggered TXOP sharing procedure according to the present disclosure.
FIG. 11 is a diagram for explaining an operation of an AP in a triggered TXOP sharing procedure according to the present disclosure.
FIG. 12 is a diagram for explaining an example of a triggered TXOP sharing procedure according to an example of the present disclosure.
FIG. 13 is a diagram for explaining an example of a triggered TXOP sharing procedure according to another example of the present disclosure.
FIG. 14 is a diagram for explaining an example of a triggered TXOP sharing procedure according to another example of the present disclosure.
FIG. 15 is a diagram for explaining a triggered TXOP sharing procedure according to another example of the present disclosure.
FIG. 16 is a diagram for explaining a triggered TXOP sharing procedure according to another example of the present disclosure.
FIG. 17 illustrates an example of setting a duration of a frame according to a P2P operation according to an embodiment of the present disclosure.
FIG. 18 illustrates another example of setting a duration of a frame according to a P2P operation according to an embodiment of the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.1be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

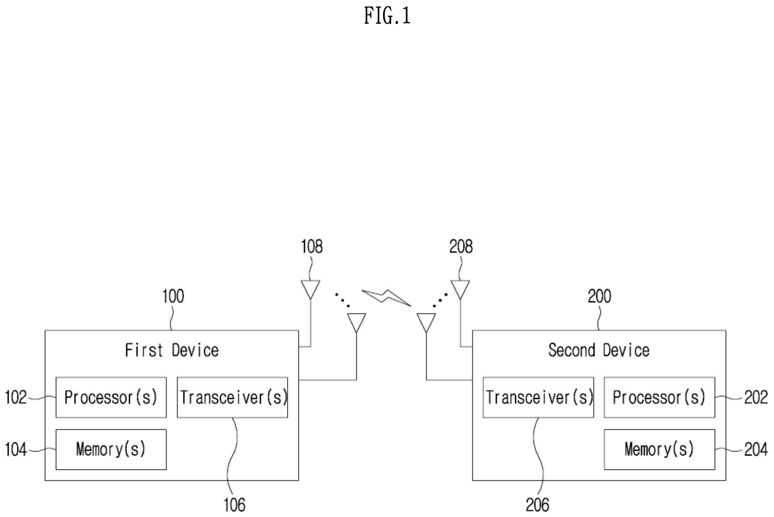

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

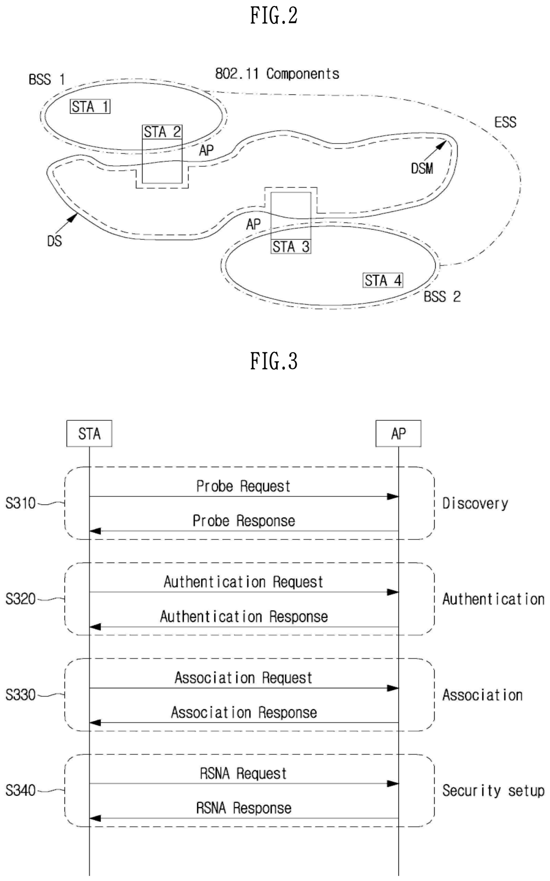

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

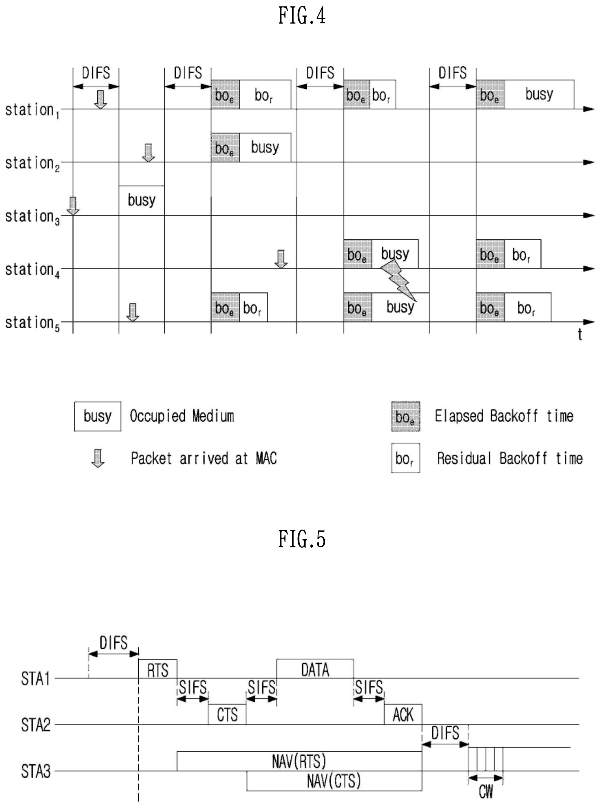

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STAS, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STAS is shorter than the remaining back-off time of STA1 at the time when STA2 completes the back-off count and starts frame transmission is exemplified. STA1 and STAS temporarily stop counting down and wait while STA2 occupies the medium. When the occupation of STA2 ends and the medium becomes idle again, STA1 and STAS wait for DIFS and resume the stopped backoff count. That is, frame transmission may be started after counting down the remaining backoff slots for the remaining backoff time. Since the remaining backoff time of STAS is shorter than that of STA1, STAS starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STAS coincides with the random backoff count value of STA4 by chance. In this case, a collision may occur between STA4 and STAS. When a collision occurs, both STA4 and STAS do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

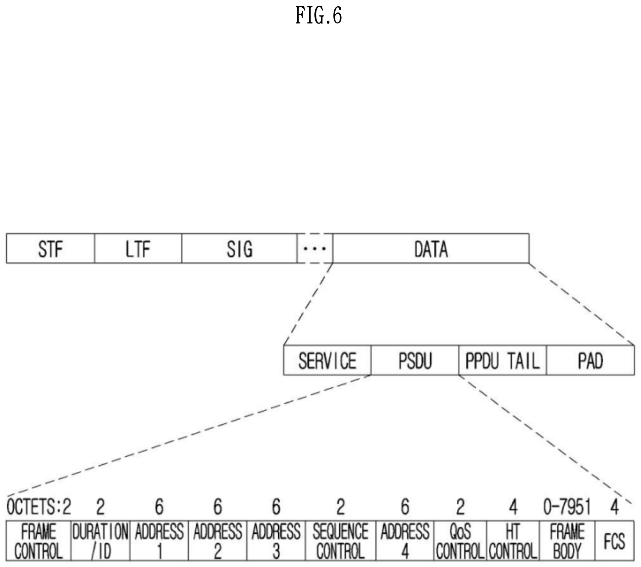

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

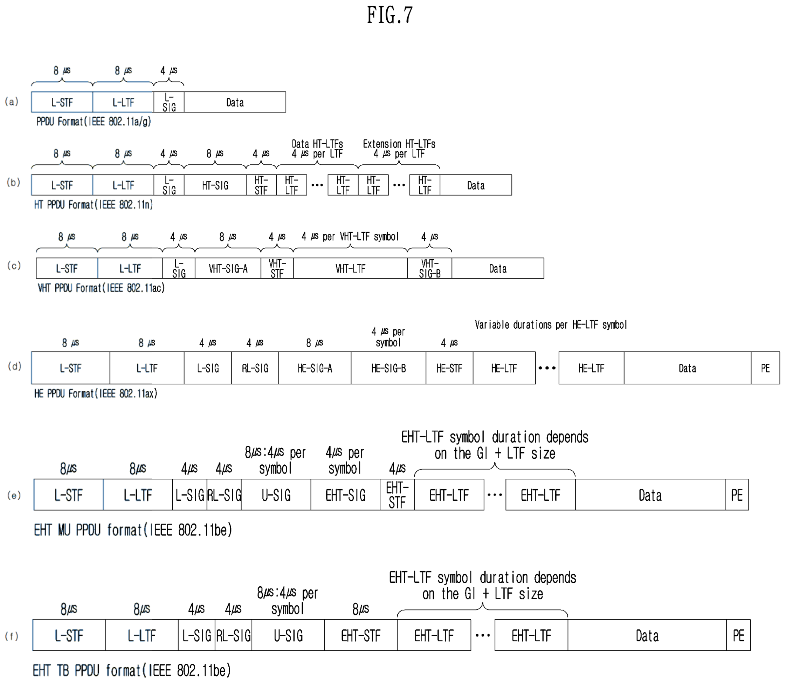

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.1 1n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

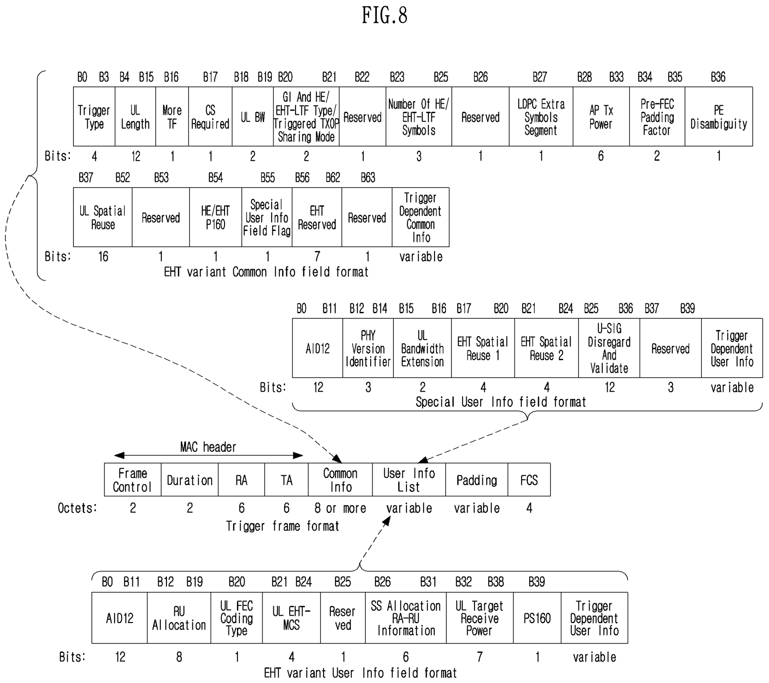

FIG. 8 is a diagram illsutrating an exemplary format of a trigger frame to which the present disclosure may be applied.

A trigger frame may allocate resources for one or more TB PPDU transmissions and may solicit TB PPDU transmissions. The trigger frame may also include other information required by an STA transmitting a TB PPDU in response thereto. The trigger frame may include common info and user info list fields in the frame body.

The common info field may include information that is common to one or more TB PPDU transmissions requested by a trigger frame, such as trigger type, UL length, presence of a subsequent trigger frame (e.g., More TF), presence of channel sensing (CS) required, UL BW (bandwidth), etc. Fig. 8 exemplarily shows an EHT variant common info field format.

The trigger type subfield of 4 bits may have values from 0 to 15. Among them, the values 0, 1, 2, 3, 4, 5, 6, and 7 of the trigger type subfield are defined to correspond to basic, Beamforming Report Poll (BFRP), multi user-block acknowledgement request (MU-BAR), multi user-request to send (MU-RTS), Buffer Status Report Poll (BSRP), groupcast with retries (GCR) MU-BAR, Bandwidth Query Report Poll (BQRP), and NDP Feedback Report Poll (NFRP), respectively, and the values 8 to 15 are defined as reserved.

Among the common info, the trigger dependent common info subfield may include information that is selectively included based on the trigger type.

A special user info field may be included in the trigger frame. The special user info field does not contain user-specific information, but rather contains extended common information not provided in the common info field.

The user info list contains zero or more user info fields. Fig. 8 exemplarily illustrates an EHT variant user info field format.

The AID12 subfield basically indicates that it is a user info field for an STA having the corresponding AID. In addition, if the AID12 field has a pre-determined specific value, it may be utilized for other purposes, such as allocating a random access (RA)-RU, or being configured in the form of a special user info field. The special user info field is a user info field that does not include user-specific information but includes extended common information that is not provided in the common info field. For example, the special user info field may be identified by the AID12 value of 2007, and the special user info field flag subfield in the common info field may indicate whether the special user info field is included.

The RU allocation subfield may indicate the size and location of RU/MRU. For this purpose, the RU allocation subfield may be interpreted together with the PS160 (primary/secondary 160MHz) subfield of the user info field, the UL BW subfield of the common info field, etc.

### Triggered TXOP sharing procedure for multiple Peer-to-Peer (P2P) communications

The triggered TXOP sharing procedure may allow an AP to allocate a portion of its TXOP to one associated non-AP STA for transmitting one or more non-TB PPDUs.

A TXOP may correspond to a time duration during which a particular QoS STA (e.g., an AP STA and/or a non-AP STA) has the right to initiate a frame exchange sequence over the wireless medium (WM). For example, a TXOP may be defined by a start time and a maximum duration.

When a TXOP sharing mode subfield is defined in an MU-RTS frame in relation to the triggered TXOP sharing mode and the value of the subfield is not 0, the frame may be referred to as an MU-RTS TXOP sharing (TXS) trigger frame.

For example, the TXOP sharing mode subfield may be encoded as follows.

If the value of the TXOP sharing mode subfield of the MU-RTS frame is 0, it corresponds to an MU-RTS that does not initiate the MU-RTS TXOP sharing procedure.

If the value of the TXOP sharing mode subfield of the MU-RTS frame is 1, it corresponds to an MU-RTS that initiates an MU-RTS TXOP sharing procedure in which the scheduled STA may only transmit MPDU(s) addressed to its associated AP.

If the value of the TXOP sharing mode subfield of the MU-RTS frame is 2, it corresponds to an MU-RTS that initiates an MU-RTS TXOP sharing procedure that enables the scheduled STA to transmit MPDU(s) addressed to its associated AP or addressed to another STA.

The value 3 of the TXOP sharing mode subfield of the MU-RTS frame may be defined as a reserved value.

Specifically, according to the triggered TXOP sharing mode 1, the AP may transmit an MU-RTS TXS trigger frame to allocate time for the STA to transmit a non-TB PPDU to the AP, and the STA may respond thereto.

According to the triggered TXOP sharing mode 2, an AP may transmit an MU-RTS TXS trigger frame to allocate time for an STA to transmit a non-TB PPDU to other STA(s) or the AP, and the STA may respond to it. In the triggered TXOP sharing mode 2, a transmission by an STA to other STA(s) may be referred to as a peer-to-peer (P2P) transmission.

An STA that uses information from a received MU-RTS TXS trigger frame as the most recent basis for its network allocation vector (NAV) update shall not reset its NAV after the NAV timeout timer expires unless it receives a CF-End frame that satisfies the conditions for TXOP truncation.

NAV is maintained by each STA and is an indicator of a time period during which no transmission on the wireless medium (WM) is initiated by the STA, regardless of whether the clear channel assessment (CCA) function of the STA senses that the WM is busy. For example, an expected channel occupancy time may be indicated through the duration information in the frames (e.g., RTS/CTS frames) exchanged between the transmitting STA and the receiving STA, and the remaining STAs (e.g., third-party STAs) other than the transmitting STA and the receiving STA may set a NAV timer corresponding to the indicated time period and may not perform transmission on the WM until the value of the NAV timer expires (or becomes 0).

After transmitting a CTS frame requested by an MU-RTS TXS trigger frame received from an AP to which an STA is associated, the STA may ignore a NAV set by the AP within the time allocation signaled in the MU-RTS TXS trigger frame. That is, if a NAV is set, the wireless medium is regarded as busy or transmission is not initiated, and therefore, in order to allow transmission of an STA that has been allocated/shared a TXOP of the AP in the triggered TXOP sharing procedure, the STA may ignore the NAV set by the AP.

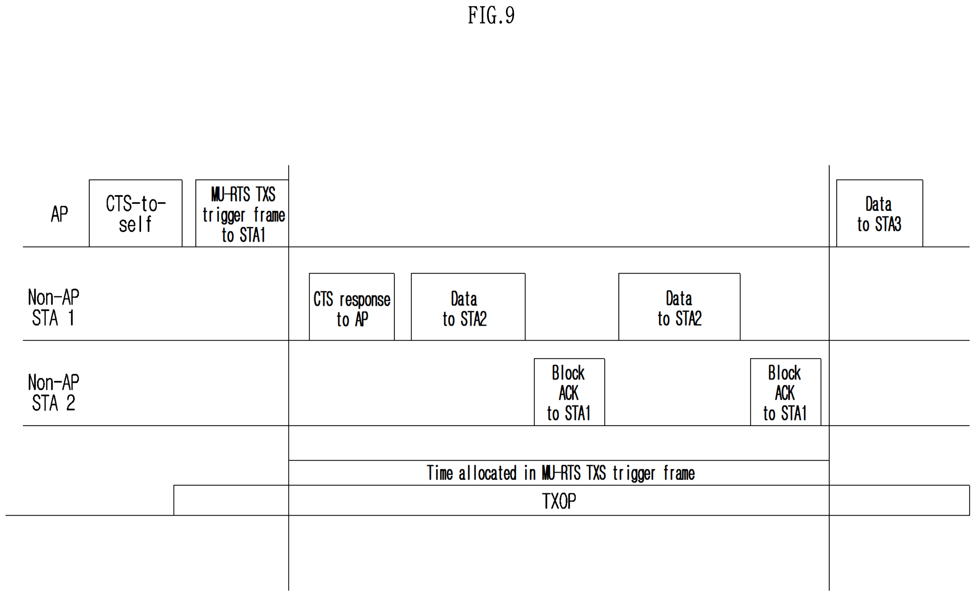

FIG. 9 is a diagram for explaining an example of a triggered TXOP sharing procedure to which the present disclosure may be applied.

The example of Fig. 9 corresponds to an example of triggered TXOP sharing mode 2. That is, it is assumed that the value of the TXOP sharing mode subfield of the MU-RTS TXS trigger frame transmitted by the AP to the non-AP STA1 is set to 2.

Here, the MU-RTS TXS trigger frame transmitted by the AP to the non-AP STA1 may include time allocation information.

For example, the user info field format of the MU-RTS TXS trigger frame may include an AID12 subfield, an RU allocation subfield, an allocation duration subfield, a PS160 subfield, and a reserved bit.

Here, the AID12 subfield corresponds to the identification information of the STA, and the allocation duration subfield may indicate a time duration allocated to the corresponding STA. At this time, the corresponding time duration may be indicated in units of 16us. In this regard, in terms of STA1 (i.e., non-AP STA), the corresponding time duration may be applied from the time when an indication primitive of the physical layer (e.g., PHY-RXEND.indication primitive) for a PPDU including an MU-RTS TXS trigger frame is generated.

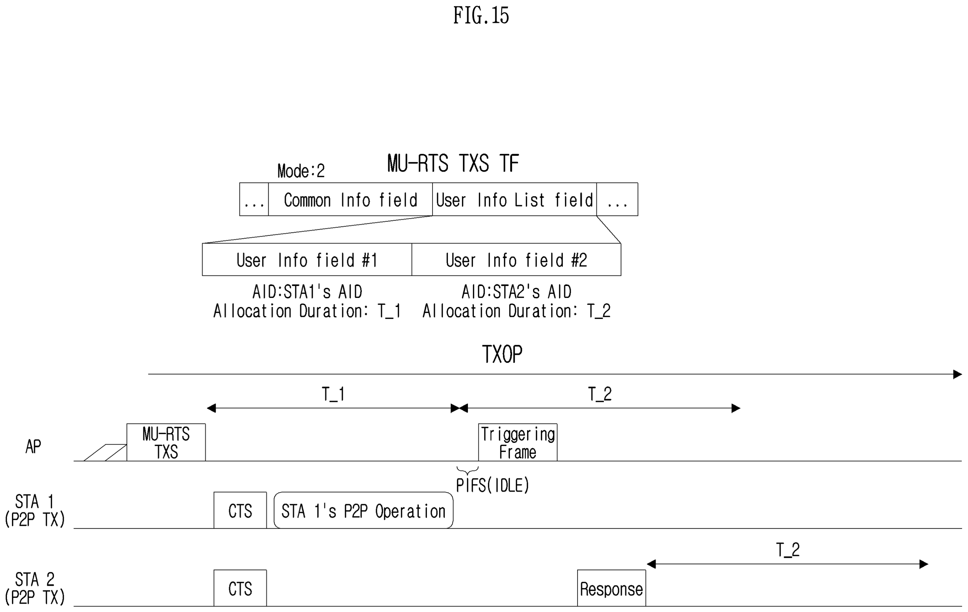

STA1 may transmit a CTS frame in response to the MU-RTS TXS trigger frame from the AP, and transmit data to STA2 (i.e., P2P transmission) and receive a block ACK during the time allocated by the MU-RTS TXS trigger frame (which corresponds to a part of the TXOP of the AP). When the time allocated by the MU-RTS TXS trigger frame expires (e.g., after PIFS from the expiration of the allocated time), the AP may perform transmission (e.g., data transmission to another STA, STA3) during its TXOP. Although not illustrated in FIG. 15, STA1 may also transmit a frame to the AP during the time allocated by the MU-RTS TXS trigger frame.

In relation to the above-described procedure, an AP (e.g., EHT AP) in an existing wireless LAN system may allocate time to only one STA for P2P transmission by using only one user info field in the MU-RTS TXS trigger frame.

However, in order to support a case where multiple STAs perform P2P transmission, the triggered TXOP sharing procedure described above needs to be modified. Therefore, the present disclosure proposes a procedure for supporting P2P transmission of multiple STAs (i.e., a frame sequence and a time allocation method).

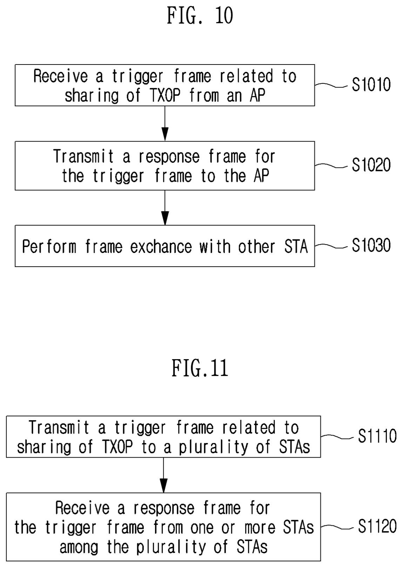

FIG. 10 is a diagram for explaining an operation of an STA in a triggered TXOP sharing procedure according to the present disclosure.

In step S1010, the STA may receive a trigger frame related to sharing of TXOP from the AP.

For example, the STA may be a non-AP STA, an STA associated with an AP, or an STA within the coverage of a basic service set (BSS) to which the AP belongs.

Here, the trigger frame may include a common info field and a plurality of user info fields for a plurality of STAs including the corresponding STA.

For example, the trigger frame in step S1010 may be a trigger frame defined to allocate a time duration related to TXOP sharing to multiple STAs. That is, the trigger frame may be defined to be transmitted to multiple STAs.

In step S1020, the STA may transmit a response frame to the trigger frame to the AP.

For example, the trigger frame in step S1010 may correspond to a multiple user-request to send (MU-RTS) TXOP sharing (TXS) trigger frame, and the response frame in step S1020 may correspond to a clear ro send (CTS) frame for the MU-RTS TXS trigger frame.

In this regard, the timing of the time duration allocated to the corresponding STA within the TXOP of the AP may be identified based on the order of the user info fields for the corresponding STA among a plurality of user info fields included in the trigger frame.

For example, if there are one or more user info fields for one or more other STAs included in the multiple STAs prior to a user info field for the corresponding STA, the timing of the time duration allocated to the corresponding STA may be located after the sum of the one or more time durations allocated to the one or more other STAs. In this case, the corresponding STA may (sequentially) decode the one or more user info fields for the one or more other STAs to derive the sum of the one or more time durations.

Additionally, an STA may perform transmission of a frame addressed to another STA (e.g., P2P transmission) in a time duration allocated to it. In this case, the TXOP sharing mode subfield included in the common info field of the trigger frame may be set to a value (e.g., value 2) indicating a TXOP sharing mode that allocates time to transmit a frame addressed to another STA from the STA. For example, the TXOP shared mode subfield included in the trigger frame may be set to a value indicating the TXOP shared mode that allocates a time duration to perform frame exchange between the STA and another STA.

Additionally or alternatively, a user info field for another STA included in the plurality of STAs may be located before the user info field for the corresponding STA, and a TXOP return by the other STA may exist. Here, the TXOP return may mean a procedure performed for the AP for the purpose of terminating time allocation when all transmissions are completed within the time duration allocated to the STA. In this case, the STA may receive an additional frame from the AP that triggers time duration allocation within the TXOP. Here, the frame may correspond to at least one of a control frame (e.g., an MU-RTS TXS frame, an RTS frame, etc.), a quality of service (QoS) data frame, or a QoS null frame.

Additionally or alternatively, a user info field for another STA included in the plurality of STAs may be located before a user info field for the corresponding STA, and transmission of a response frame to a trigger frame by another STA may be absent. That is, a case may occur where some STAs among the plurality of STAs that have received the corresponding trigger frame do not transmit a response frame. In this case, the STA may receive an additional frame that triggers time duration allocation within a TXOP from the AP. Here, the frame may correspond to at least one of a control frame (e.g., an MU-RTS TXS frame, an RTS frame, etc.), a QoS data frame, or a QoS null frame.

Additionally or alternatively, a user info field for another STA included in the plurality of STAs may be located before a user info field for the corresponding STA, and in order to prevent collision, a case may be considered in which the AP determines whether the channel is in an IDLE state at the end time of a time duration allocated to another STA. If the channel is in an IDLE state, the STA may receive an additional frame from the AP, which triggers time duration allocation within a TXOP after a PIFS based on the end time. Here, the frame may correspond to at least one of a control frame (e.g., an MU-RTS TXS frame, an RTS frame, etc.), a QoS data frame, or a QoS null frame.

Additionally, various methods for signaling a TXOP sharing mode for allocating time to multiple STAs based on multiple user info fields included in the aforementioned single trigger frame may be considered. For example, for indicating the TXOP sharing mode, the TXOP sharing mode subfield included in the common info field may be set to a value indicating the TXOP sharing mode for allocating time to multiple STAs based on multiple user info fields. Alternatively, with respect to indicating the TXOP sharing mode, the common info field may include specific 1-bit information for indicating the TXOP sharing mode for allocating time to multiple STAs based on a plurality of user info fields.

Thereafter, in step S1030, a STA (e.g., a P2P TX STA) may perform a frame exchange with other STA (e.g., a P2P RX STA) in a time duration allocated to the corresponding STA, based on the aforementioned trigger frame.

At this time, a duration of a frame transmitted in the time duration allocated to the corresponding STA may be set based on an end timing of the aforementioned TXOP (i.e., the TXOP set by the AP) or an end timing of the frame exchange with the other STA.

For example, based on that the aforementioned duration is set according to the end timing of the frame exchange, the duration may be set from a transmission end timing of a frame transmitted in the time duration allocated to the corresponding STA to the end timing of the frame exchange.

In this regard, with respect to the time duration allocated to the corresponding STA, the duration of a frame transmitted by the other STA may be set based on the duration of a frame transmitted by the STA.

Additionally or alternatively, within the TXOP, a first time duration for a frame exchange between a first STA and a second STA may be allocated, and a second time duration for a frame exchange between a third STA and a fourth STA may be allocated after the first time duration. In this case, a duration of a first frame transmitted in the first time duration may be set from a transmission end timing of the first frame to an end timing of the frame exchange between the first STA and the second STA. Further, a duration of a second frame transmitted in the second time duration may be set from a transmission end timing of the second frame to an end timing of the frame exchange between the third STA and the fourth STA.

In another example, based on that the aforementioned duration is set according to the end timing of the TXOP, the duration may be set from a transmission end timing of a frame transmitted in the time duration allocated to the corresponding STA to the end timing of the TXOP.

In this regard, within the TXOP, a first time duration for a frame exchange between a first STA and a second STA may be allocated, and a second time duration for a frame exchange between a third STA and a fourth STA may be allocated after the first time duration. In this case, the first STA may correspond to a STA receiving a first frame from the AP that triggers the frame exchange between the second STA, and the third STA may correspond to a STA receiving a second frame from the AP that triggers the frame exchange between the fourth STA.

Here, the third STA may be configured to update the Intra-BSS NAV based on the frame transmitted from the first STA within the first time duration to a NAV set based on a transmitting address (TA) for the frame transmitted from the first STA.

Additionally or alternatively, the third STA may be configured to check/identify a TA for a frame transmitted from the first STA, based on the frame exchange between the first STA and the second STA.

Additionally or alternatively, in a case where a receiving address (RA) of a frame transmitted from the second STA is the same as a TA of a frame transmitted from the first STA, the third STA may be configured to set a Basic NAV based on the frame transmitted from the second STA and to ignore, or may be configured not to set a Basic NAV based on the frame transmitted from the second STA. At this time, the first STA and the third STA may be STAs within coverage of a first BSS to which the AP belongs, and the second STA may be a STA within coverage of a second BSS different from the first BSS.

Additionally or alternatively, based on that address information of the second frame includes a MAC address of the first STA, the second frame may be defined to further include information indicating whether to reset a network allocation vector (NAV).

The method performed by the STA described in the example of FIG. 10 may be performed by the first device (100) of FIG. 1. For example, one or more processors (102) of the first device (100) of FIG. 1 may be configured to receive a trigger frame related to sharing of a TXOP from an AP (200) through one or more transceivers (106), and transmit a response frame to the trigger frame to the AP (200).

Additionally, one or more processors (102) may be configured to identify a point in time of a time duration allocated to the first device (100) based on an order of user info fields for the first device (100) among a plurality of user info fields included in the trigger frame. For example, if one or more user info fields for one or more other STAs exist before a user info field for the first device (100), one or more processors (102) may be configured to decode one or more user info fields for the one or more other STAs to calculate a sum of time durations allocated to the one or more other STAs. Based on this, one or more processors (102) may be configured to confirm that a point in time of a time duration allocated to the first device (100) is located after the sum of time durations calculated based on reception of the trigger frame.

Additionally, one or more processors (102) may be configured to transmit a frame addressed to another STA or a non-TB PPDU transmission to the AP (200) via one or more transceivers (106) during a time period allocated for the first device (100) within the TXOP.

Furthermore, one or more memories (104) of the first device (100) may store instructions for performing the method described in the example of FIG. 10 or the examples described below when executed by one or more processors (102).

FIG. 11 is a diagram for explaining an operation of an AP in a triggered TXOP sharing procedure according to the present disclosure.

In step S1110, the AP may transmit a trigger frame related to sharing of TXOP to a plurality of STAs.

For example, the plurality of STAs may be non-AP STAs, or may be STAs associated with an AP or within the coverage of a basic service set (BSS) to which the AP belongs.

Here, the trigger frame may include a common info field and a plurality of user info fields for a plurality of STAs including the corresponding STA.

For example, the trigger frame in step S1110 may be a trigger frame defined to allocate a time duration related to TXOP sharing to a plurality of STAs.

In this regard, the TXOP sharing mode subfield included in the aforementioned trigger frame may be set to a value indicating a TXOP sharing mode that allocates a time duration to perform frame exchange between an STA belonging to the plurality of STAs and an STA not belonging to the plurality of STAs.

In step S1120, the AP may receive a response frame to a trigger frame from one or more STAs among multiple STAs.

In this regard, the timing of the time duration allocated to the corresponding STA within the TXOP of the AP may be determined based on the order of the user info fields for the corresponding STA among a plurality of user info fields included in the trigger frame.

Additionally, in a case where the aforementioned frame exchange (i.e., a frame exchange between a STA belonging to the plurality of STAs and a STA not belonging to the plurality of STAs) is performed in a time duration allocated based on the trigger frame in step S1110, a duration of a frame transmitted in the allocated time duration may be set based on an end timing of the TXOP or an end timing of the frame exchange.

In the example of FIG. 11, the features of the trigger frame, response frame, TXOP sharing mode, and setting of the duration for the frame within the allocated time duration (e.g., P2P operation duration) are the same as those described in the example of Fig. 10, so redundant descriptions are omitted.

The method performed by the AP described in the example of FIG. 11 may be performed by the second device (200) of FIG. 1. For example, one or more processors (202) of the second device (200) of FIG. 1 may be configured to transmit a trigger frame related to sharing of TXOP to a plurality of STAs (100) through one or more transceivers (206), and receive a response frame to the trigger frame from one or more STAs (100) among the plurality of STAs (100).

Additionally, one or more processors (202) may be configured to determine a time point in a time duration allocated to each STA (100) based on an order of the user info fields with respect to a plurality of user info fields when generating a trigger frame. For example, one or more processors (202) may be configured to sequentially encode a plurality of user info fields for a plurality of STAs to generate a trigger frame.

Furthermore, one or more memories (204) of the second device (200) may store commands for performing the method described in the example of FIG. 11 or the examples described below when executed by one or more processors (202).

Hereinafter, more detailed examples of the present disclosure will be described with reference to FIGS. 9, 10, and 11.

In the present disclosure, for the clarity of explanation, an STA allocated for P2P transmission (e.g., non-AP STA1 in FIG. 9) is referred to as a P2P TX STA, and an STA receiving a frame from a P2P TX STA (e.g., non-AP STA2 in FIG. 9) is referred to as a P2P RX STA. However, the scope of the present disclosure is not limited by these names. Additionally, in the description below, an STA that is not specified as a non-AP or an AP may correspond to an AP STA or a non-AP STA.

### Embodiment 1

The present embodiment relates to a method of allocating time to each STA by using multiple user info fields corresponding to multiple STAs in one MU-RTS TXS trigger frame to support P2P transmission of multiple STAs.

Specifically, in order to extend the triggered TXOP sharing procedure to multiple users, a method of allocating time by allocating a user info field for each STA for multiple STAs through an MU-RTS TXS trigger frame may be applied. In this case, STAs that have received the MU-RTS TXS trigger frame (i.e., their own user info field) may transmit a CTS frame simultaneously.

At this time, STAs need to know exactly when the time they have been allocated to the AP for non-TB PPDU transmission or P2P transmission.

Below, a specific method for indicating a time duration allocated to each STA based on a user info field is described.

As described above, in order to allocate time to multiple STAs (i.e., multiple users), multiple user info fields may be present/included in the user info list field of the MU-RTS TXS trigger frame.

In this case, each user info field is defined to allocate time to each STA, and the time may be calculated sequentially from the user info field allocated first to the last user info field. That is, the time duration allocated to each STA may be indicated based on the order of the user info fields included in the user info list field.

At this time, each STA can confirm/recognize the starting point of the time duration allocated to it by adding the time of the user info field located/existing in front of its own user info field.

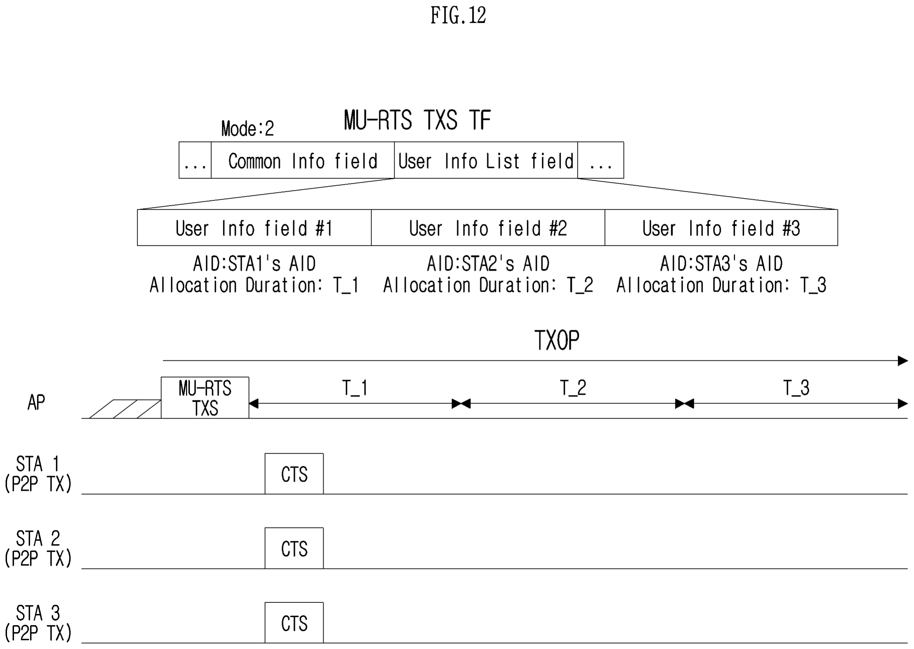

FIG. 12 is a diagram for explaining an example of a triggered TXOP sharing procedure according to an example of the present disclosure.

Referring to FIG. 12, an AP may transmit an MU-RTS TXS trigger frame with TXOP sharing mode set to 2 to multiple STAs (i.e., STA1, STA2, STA3) corresponding to P2P TX STAs. The AP in FIG. 12 may correspond to an AP in an existing wireless LAN system (e.g., EHT AP) or an AP in a next-generation wireless LAN system (e.g., UHR AP, next-wifi AP, etc.).

Here, the MU-RTS TXS trigger frame may include a common info field and a user info list field, and the user list info field may include a plurality of user info fields for a plurality of STAs.

Specifically, the user info list field may include a first user info field (User Info field #1) for allocating a T_1 duration to STA1, a second user info field (User Info field #2) for allocating a T_2 duration to STA2, and a third user info field (User Info field #3) for allocating a T_3 duration to STA3. Through the plurality of user info fields, the AP may allocate a time duration for non-TB PPDU transmission or P2P transmission to each STA.

At this time, the plurality of STAs (i.e., STA1, STA2, STA3) may simultaneously transmit CTS frames to the AP in response to the MU-RTS TXS trigger frame.

In the case of STA1, since its own user info field is located at the front, STA1 may perform P2P transmission during the allocated T_1 duration after receiving the MU-RTS TXS trigger frame as in the procedure of FIG. 9 described above.

STA2, which has been allocated the T_2 duration, may recognize/identify that the T_2 duration is the time duration allocated to it, starting from the T_1 duration corresponding to the allocated duration information of STA1.

STA3, which has been allocated the T_3 duration, may recognize/identify that the T_3 duration is the time duration allocated to it after the sum of the T_1 and T_2 durations (T_1 + T_2), based on the T_1 duration corresponding to the allocation duration information of STA1 and the T_2 duration corresponding to the allocation duration information of STA2.

The method described in Fig. 12 has the advantage of low design complexity in terms of multiple users (MUs).

With respect to the method, when each STA decodes the user info list field, it is necessary to decode the allocation duration subfield of the user info field other than its AID until it confirms the user info field in which its AID is recognized.

Additionally or alternatively, with respect to the method, any STA may complete all transmissions before the time allocated to it expires, thereby performing a TXOP return to the AP. In this case, a channel corresponding to a portion of the time duration allocated to the STA (i.e., the remaining time duration after all transmissions are completed) may not be operated by any STA.

Additionally or alternatively, with respect to the method, some STAs may not respond (e.g., transmit a CTS frame to the AP) depending on their channel state. For example, if STA2 in FIG. 12 does not respond a CTS frame due to a BUSY channel, the T_2 duration may correspond to an inoperable time duration. That is, a case may occur where the channel corresponding to the T_1 duration and the T_3 duration is not operated by any STA.

Considering these points, in order to improve the utilization of time durations/channels, a method may additionally be applied in which the AP informs other STAs allocated with time durations of information about time durations/channels that are not operated by other STAs. In this regard, the AP may transmit a triggering frame to the corresponding STA.

First, a method that an AP transmits a triggering frame to other STAs when a TXOP return is performed by a specific STA is described.

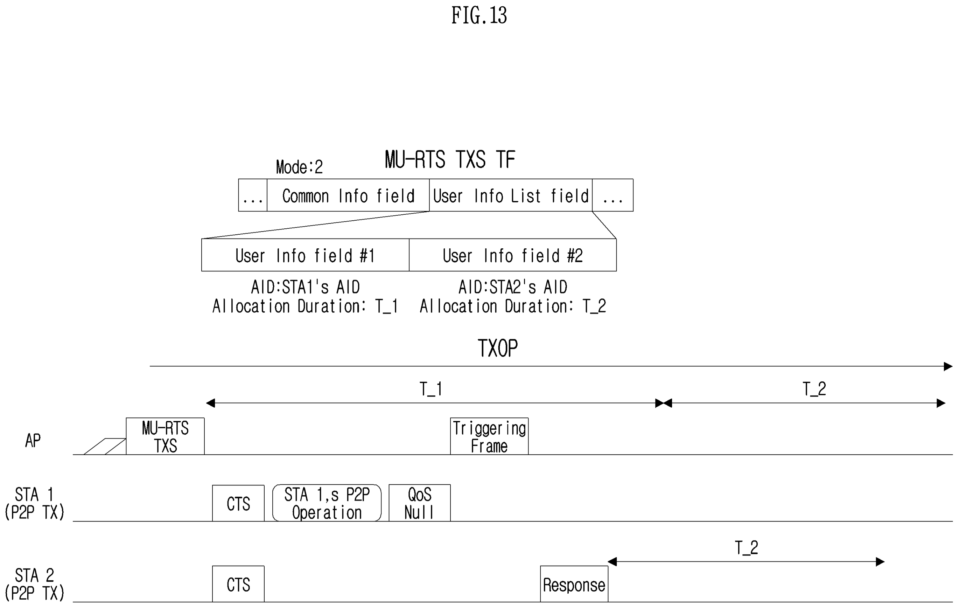

FIG. 13 is a diagram for explaining an example of a triggered TXOP sharing procedure according to another example of the present disclosure.

Referring to FIG. 13, the AP may transmit an MU-RTS TXS trigger frame with the TXOP sharing mode set to 2 to STA1 and STA2 corresponding to P2P TX STAs. Here, the MU-RTS TXS trigger frame may include a common info field and a user info list field, and the user list info field may include a plurality of user info fields for a plurality of STAs.

Specifically, the user info list field may include a first user info field (User Info field #1) for allocating a T_1 duration to STA1 and a second user info field (User Info field #2) for allocating a T_2 duration to STA2. Through the plurality of user info fields, the AP may allocate a time duration for non-TB PPDU transmission or P2P transmission to each STA.

In this regard, STA1 and STA2 may simultaneously transmit a CTS frame to the AP in response to the MU-RTS TXS trigger frame.

STA1 may perform P2P operation during the T_1 duration allocated to it.

If STA1 has no more frames to transmit within the T_1 duration, STA1 may perform a TXOP return to the AP to terminate the time allocated to it. For example, the TXOP return may be indicated by setting the RDG/More PPDU subfield of HT Control in the MAC header to a value of 0. In this regard, the QoS Data/Null frame may also be used.

At this time, STA2 needs to wait until the start of T_2 duration because it is not yet the start of T_2 duration and may not recognize the TXOP return by STA1.

Taking this into account, in order to prevent channel waste during the time duration before the start of the T_2 duration, the AP may transmit a frame to STA2 that triggers STA2 to perform P2P transmission by utilizing the time duration.

A control frame or QoS Data/Null frame may be utilized as a triggering frame to trigger the corresponding operation.

For example, as an example of a control frame, an MU-RTS TXS trigger frame may be (re)used. The method may be the same as the method of allocating time for a single user (SU). At this time, the information for the time duration for STA2, i.e., the T_2 duration, may be changed to another time.

Since the triggering frame in the example corresponds to an MU-RTS TXS trigger frame that occurs in the middle of a TXOP and the pre-allocated time is changed based on this, a separate mode for the operation in Fig. 13 may be set. For example, for the operation, a reserved value (i.e., 3) of the existing TXOP sharing mode field may be used, or a reserved bit of the common info field included in the MU-RTS TXS trigger frame may be used.

Additionally or alternatively, since the triggering frame related to the operation in FIG. 13 may be transmitted to STA2 individually, the allocation time information for STA2 may be transmitted in the A-Control field of the MAC header by utilizing the QoS Data/Null frame. That is, one type of the A-Control field can be newly defined. In this case, the A-Control field of the corresponding type includes an allocation duration subfield as described above, and may further include an RU allocation subfield and/or a PS160 subfield, etc.

Additionally or alternatively, with respect to the operation in FIG. 13, a case may be considered where the RU location information (e.g., the RU allocation subfield) or the time allocation information (e.g., the allocation duration subfield) does not change. In this case, in order to reduce overhead, the AP may transmit an RTS frame corresponding to a QoS Data/Null frame and a control frame to STA2 without information such as the A-Control field described above. At this time, the STA receiving the frame may recognize this and immediately start transmission, since it has been allocated an RU and/or a time duration through a previous MU-RTS TXS trigger frame.

Next, a method that an AP transmits a triggering frame to another STA when a specific STA does not respond to a CTS frame is described.

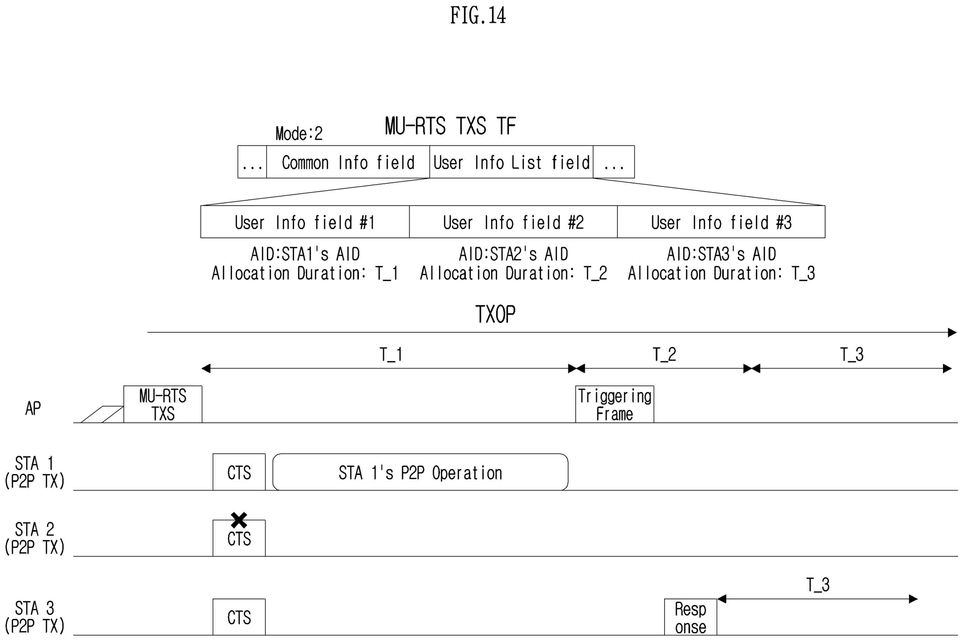

FIG. 14 is a diagram for explaining an example of a triggered TXOP sharing procedure according to another example of the present disclosure.

Referring to FIG. 14, an AP may transmit an MU-RTS TXS trigger frame with TXOP sharing mode set to 2 to multiple STAs (i.e., STA1, STA2, and STA3) corresponding to P2P TX STAs. Here, the MU-RTS TXS trigger frame may include a common info field and a user info list field, and the user list info field may include a plurality of user info fields for multiple STAs.

Specifically, the user info list field may include a first user info field (User Info field #1) for allocating a T_1 duration to STA1, a second user info field (User Info field #2) for allocating a T_2 duration to STA2, and a third user info field (User Info field #3) for allocating a T_3 duration to STA3. Through the plurality of user info fields, the AP may allocate a time duration for non-TB PPDU transmission or P2P transmission to each STA.

In this regard, STA1 and STA3 simultaneously transmit CTS frames to the AP in response to the MU-RTS TXS trigger frame, and STA2 may not transmit a CTS frame to the AP. In this case, since there is no CTS frame response from STA2, the channel may not be operated during the T_2 duration allocated to STA2.

Therefore, in order to prevent channel waste during the T_2 duration, the AP may transmit a frame to STA3 that triggers STA3 to perform P2P transmission by utilizing the time duration.

A control frame or QoS Data/Null frame may be utilized as a triggering frame to trigger the corresponding operation.

For example, as an example of a control frame, an MU-RTS TXS trigger frame may be (re)used. The method may be the same as the method of allocating time for a single user (SU). At this time, the information for the time duration for STA3, i.e., the T_3 duration, may be changed to another time.

Since the triggering frame in the example corresponds to an MU-RTS TXS trigger frame that occurs in the middle of a TXOP and the pre-allocated time is changed based on this, a separate mode for the operation in FIG. 14 may be set. For example, for the operation, a reserved value (i.e., 3) of the existing TXOP sharing mode field may be used, or a reserved bit of the common info field included in the MU-RTS TXS trigger frame may be used.

Additionally or alternatively, since the triggering frame related to the operation in FIG. 14 may be transmitted individually to STA3, the allocation time information for STA3 may be transmitted in the A-Control field of the MAC header by utilizing the QoS Data/Null frame. That is, one type of the A-Control field can be newly defined. In this case, the A-Control field of the corresponding type includes an allocation duration subfield as described above, and may further include an RU allocation subfield and/or a PS160 subfield, etc.

Additionally or alternatively, with respect to the operation in FIG. 14, a case may be considered where RU location information (e.g., RU allocation subfield) or time allocation information (e.g., allocation duration subfield) does not change. In this case, in order to reduce overhead, the AP may transmit an RTS frame corresponding to a QoS Data/Null frame and a control frame to STA3 without information such as the A-Control field described above. At this time, the STA receiving the frame may recognize this and immediately start transmission, since it has been allocated an RU and/or time duration through a previous MU-RTS TXS trigger frame.

Additionally, to prevent collision, a method of transmitting a triggering frame to another STA after a time allocated to one STA is described.

FIG. 15 is a diagram for explaining a triggered TXOP sharing procedure according to another example of the present disclosure.

Referring to FIG. 15, the AP may transmit an MU-RTS TXS trigger frame with the TXOP sharing mode set to 2 to STA1 and STA2 corresponding to P2P TX STAs. Here, the MU-RTS TXS trigger frame may include a common info field and a user info list field, and the user list info field may include a plurality of user info fields for a plurality of STAs.

Specifically, the user info list field may include a first user info field (User Info field #1) for allocating a T_1 duration to STA1 and a second user info field (User Info field #2) for allocating a T_2 duration to STA2. Through the plurality of user info fields, the AP may allocate a time duration for non-TB PPDU transmission or P2P transmission to each STA.

In this regard, STA1 and STA2 may simultaneously transmit a CTS frame to the AP in response to the MU-RTS TXS trigger frame.

STA1 may perform P2P operation during the T_1 duration allocated to it.

After STA1 completes the P2P operation, AP may perform CCA during PIFS from the end of the time allocated to STA1 to avoid collision. If the channel is in an IDLE state according to the CCA, AP may transmit a triggering frame to STA2.

STA2, which has received the triggering frame, transmits a response frame to the AP and may perform P2P operation (or non-TB PPDU transmission to the AP) during the T_2 duration based on the response time.

Here, the triggering frame may be a control frame or a QoS Data/Null frame, similar to those in FIGS. 13 and 14 described above.

For example, as an example of a control frame, an MU-RTS TXS trigger frame may be (re)used. The method may be the same as the method of allocating time for a single user (SU). At this time, the information for the time duration for STA2, i.e., the T_2 duration, may be changed to another time.

Since the triggering frame in the example corresponds to an MU-RTS TXS trigger frame that occurs in the middle of a TXOP and the pre-allocated time is changed based on this, a separate mode for the operation in FIG. 15 may be set. For example, for the operation, a reserved value (i.e., 3) of the existing TXOP sharing mode field may be used, or a reserved bit of the common info field included in the MU-RTS TXS trigger frame may be used.

Additionally or alternatively, since the triggering frame related to the operation in FIG. 15 may be transmitted to STA2 individually, the allocation time information for STA2 may be transmitted in the A-Control field of the MAC header by utilizing the QoS Data/Null frame. That is, one type of the A-Control field may be newly defined. In this case, the A-Control field of the corresponding type includes an allocation duration subfield as described above, and may further include an RU allocation subfield and/or a PS160 subfield, etc.

Additionally or alternatively, with respect to the operation in FIG. 15, a case may be considered where RU location information (e.g., RU allocation subfield) or time allocation information (e.g., allocation duration subfield) is not changed. In this case, in order to reduce overhead, the AP may transmit an RTS frame corresponding to a QoS Data/Null frame, a control frame to STA2 without information such as the A-Control field described above. At this time, the STA receiving the frame may recognize this and immediately start transmission, since it has been allocated an RU and/or time duration through a previous MU-RTS TXS trigger frame.

The P2P transmission (or non-TB PPDU transmission toward AP) method for multiple users (e.g. multiple STAs) proposed in this embodiment may be set to a specific mode.

That is, the STA that receives the MU-RTS TXS trigger frame may discover/confirm the indication for the corresponding mode, and thereby recognize that the corresponding MU-RTS TXS trigger frame is allocated to a plurality of users. In other words, the STA that receives the corresponding MU-RTS TXS trigger frame may recognize the existence of a plurality of user info fields, and recognize that an operation within the TXOP of the AP (e.g., transmission of a triggering frame in FIG. 13 / FIG. 14) may occur.

Signaling for this mode may be performed in the following ways.

For example, a method of changing the meaning of the values 1 and 2 of the TXOP shared mode subfield of the MU-RTS frame may be considered. That is, mode signaling may be performed through a method of extending/changing an operation for one STA to an operation for one or more STAs in the meaning of the values 1 and 2 of the TXOP sharing mode subfield of the above-described MU-RTS frame.

For another example, a mode for P2P transmission to a plurality of STAs or non-TB PPDU transmission toward an AP may be defined as a new TXOP sharing mode. That is, the value of 3 (i.e., the previously reserved value) of the TXOP sharing mode subfield of the aforementioned MU-RTS frame may be utilized for signaling the mode.

As another example, the mode for P2P transmission to a plurality of STAs or non-TB PPDU transmission towards AP may be signaled via the common info field of the MU-RTS TXS trigger frame. For this purpose, one reserved bit of the common info field (e.g., the value of 1) may be utilized.

### Embodiment 2

This embodiment relates to a method for sequentially performing an operation of transmitting an MU-RTS TXS frame to each STA and receiving a CST frame from the corresponding STA in order to support P2P transmission of a plurality of STAs.

Specifically, unlike the method of performing triggering for a plurality of STAs at once in Embodiment 1, the AP may sequentially allocate a time duration to each STA using an MU-RTS TXS trigger frame within one TXOP.

According to the method, when multiple STAs perform CTS responses simultaneously, a situation may not occur in which the AP does not completely determine which STA performed the response. Additionally, a case in which some time durations/channels allocated to a certain STA are not operated may not occur.

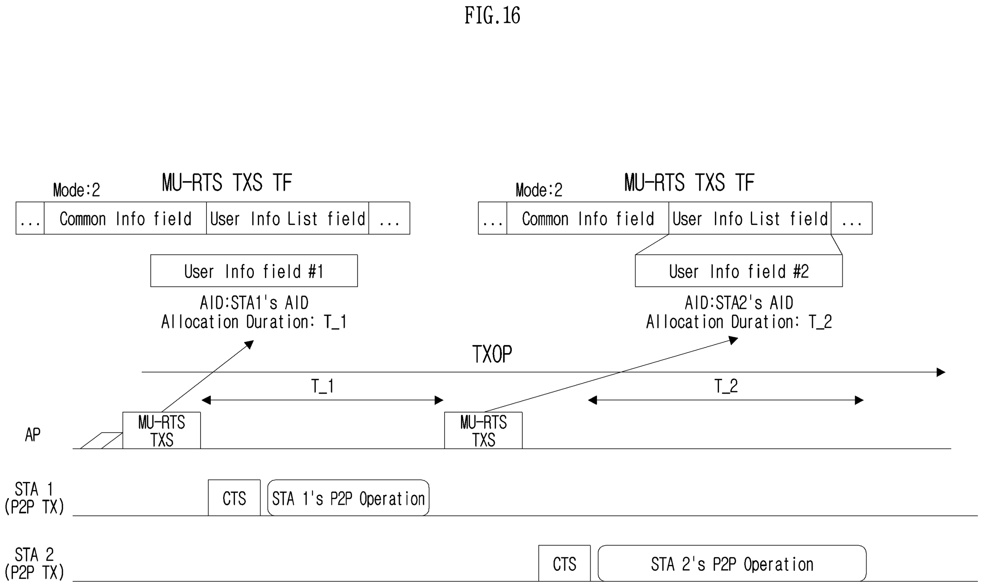

FIG. 16 is a diagram for explaining a triggered TXOP sharing procedure according to another example of the present disclosure.

Referring to FIG. 16, a time duration for P2P operation may be allocated continuously for each STA using the MU-RTS TXS trigger frame.

That is, when the P2P transmission is terminated during the allocated time duration of each STA within one TXOP, the AP may allocate a time duration for P2P transmission by transmitting an MU-RTS TXS trigger frame to the next STA.

For example, the AP may transmit an MU-RTS TXS trigger frame with TXOP sharing mode set to 2 to STA1 corresponding to a P2P TX STA. Here, the MU-RTS TXS trigger frame may include a common info field and a user info list field. The user info list field may include a first user info field (User Info field #1) for allocating a T_1 duration to STA1. STA1 may transmit a CTS frame to the AP as a response to the MU-RTS TXS trigger frame and perform a P2P operation during the T_1 duration.

When the P2P operation of STA1 is terminated, the AP may transmit an MU-RTS TXS trigger frame with TXOP sharing mode set to 2 to STA2 corresponding to another P2P TX STA. Here, the MU-RTS TXS trigger frame may include a common info field and a user info list field. The user info list field may include a second user info field (User Info field #2) for allocating a T_2 duration to STA2. STA2 may transmit a CTS frame to the AP as a response to the MU-RTS TXS trigger frame and perform a P2P operation during the T_2 duration.

If, as in FIG. 13, STA1 performs a TXOP return within the operation duration or a transmission/reception (TX/RS) operation is not performed, the AP may transmit an MU-RST TXS trigger frame for time duration allocation to STA2.

With respect to the methods described in the present disclosure, the proposed method in Embodiment 1 has the effect of reducing overhead for trigger frame signaling by being able to allocate time durations to multiple STAs at once. Additionally, even if some time intervals/channels are not operable, this may be resolved by triggering the next STA through the additional proposed method described above (e.g., QoS Data/Null frame/RTS frame transmission in FIGS. 13 and 14).

If the case occurs frequently, a method of allocating a time duration for P2P transmission by individually transmitting an MU-RTS TXS trigger frame to each STA by utilizing the proposed method in Embodiment 2 maycan be applied.

### Embodiment 3

The present embodiment relates to a scheme for setting a duration for each frame in a P2P procedure within the shared TXOP, in connection with the aforementioned TXOP sharing procedure.

In this regard, the setting of the duration may be related to a network allocation vector (NAV) setting for the corresponding frame. Here, the NAV may mean time information regarding reservation of use of a wireless medium (e.g., deferring access to the wireless medium until the NAV becomes 0).

In the case of the TXOP sharing procedure, frame transmission of each STA(s) is performed within the TXOP of the AP. Accordingly, a setting of a duration in each frame is required, and for this purpose, one or more of the following methods may be used.

### Embodiment 3-1

Embodiment 3-1 relates to a method for setting a duration of a frame to be transmitted by an STA (i.e., P2P TX) allocated time for P2P operation from an AP to the TXOP ending time of the AP.

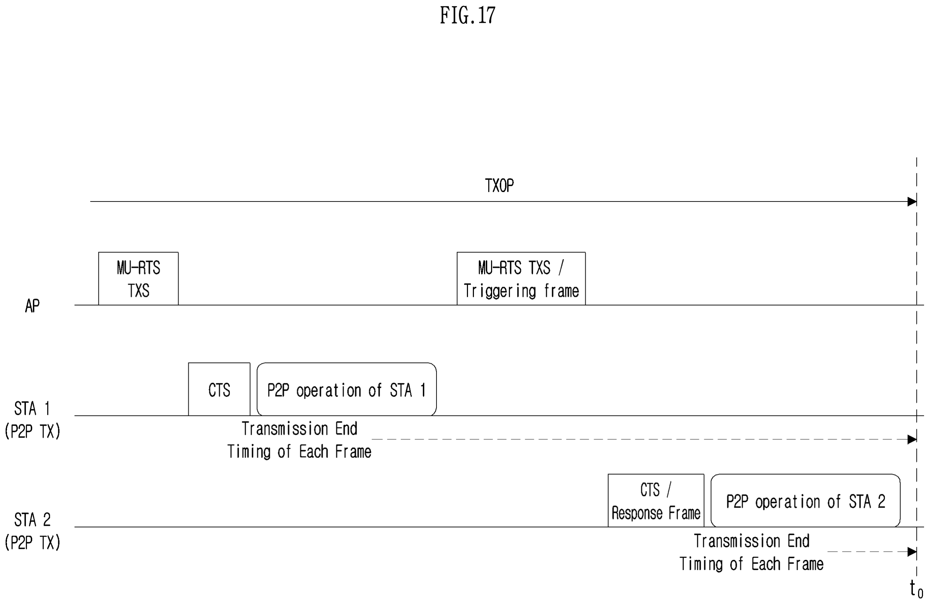

FIG. 17 illustrates an example of setting a duration of a frame according to a P2P operation according to an embodiment of the present disclosure.

Referring to FIG. 17, a duration of a frame transmitted in a P2P operation may be set from a TX ending time of the corresponding frame to an ending time (t0) of the TXOP by the AP.

Through the method proposed in the present embodiment, within a TXOP of the AP, channel access from another AP or another STA in which a NAV is set by the TXOP may be prevented. That is, there is a technical effect of efficiently protecting P2P operations of a plurality of STAs.

In this case, a specific STA that performs a subsequent P2P operation (e.g., the P2P operation of STA 2 in FIG. 17) may be affected by a preceding P2P operation (e.g., the P2P operation of STA 1 in FIG. 17).

For example, since an Intra-BSS NAV according to a frame transmitted from a P2P TX STA of the preceding P2P operation (e.g., STA 1 in FIG. 17) is not greater than an Intra-BSS NAV set from the AP, the NAV may not be separately updated.

In this regard, when a P2P RX STA of the preceding P2P operation is not in the same BSS (i.e., belongs to an OBSS), a Basic NAV is set from the corresponding P2P RX STA, and thus a STA that performs a subsequent P2P operation may not be able to transmit a frame during the allocated time.

In consideration of such a situation, the NAV (i.e., the aforementioned Intra-BSS NAV) may be updated as set from a transmitting address (TA) of a P2P TX STA (e.g., STA 1 in FIG. 17).

Additionally or alternatively, a TA of a P2P TX STA (i.e., a TA for a frame transmitted from the P2P TX STA) may be separately recognized and stored. For example, referring to FIG. 17, a STA in a subsequent P2P operation may recognize the P2P TX STA of the preceding P2P operation by overhearing a frame transmitted by the P2P TX STA and/or the P2P RX STA in the preceding P2P operation. Specifically, in a case where a receiving address (RA) of a frame transmitted from the P2P RX STA in the preceding P2P operation is the same as a TA of the P2P TX STA (i.e., the TA for a frame transmitted from the P2P TX STA), the STA in the subsequent P2P operation may set and ignore a Basic NAV, or may not set a Basic NAV.

Additionally or alternatively, when one P2P operation ends and the AP transmits a trigger frame for a subsequent P2P operation, the trigger frame may include information on NAV reset. That is, in order to solve the above-described problem (e.g., a situation in which frame transmission is not possible in an allocated interval because a Basic NAV is set by a P2P RX belonging to an OBSS), when address information of a frame transmitted in the preceding P2P operation includes a MAC address of a P2P TX STA, a method of indicating to reset the NAV may be applied. For example, the trigger frame may be defined to include information/field indicating whether to reset a NAV and information/field regarding a MAC address corresponding to the P2P TX STA.

### Embodiment 3-2

Embodiment 3-2 relates to a method for setting the duration of a frame to be transmitted by an STA (i.e., a P2P TX STA) allocated a time duration for P2P operation from an AP to the end point of the duration in which frame exchange is performed with a P2P RX STA.

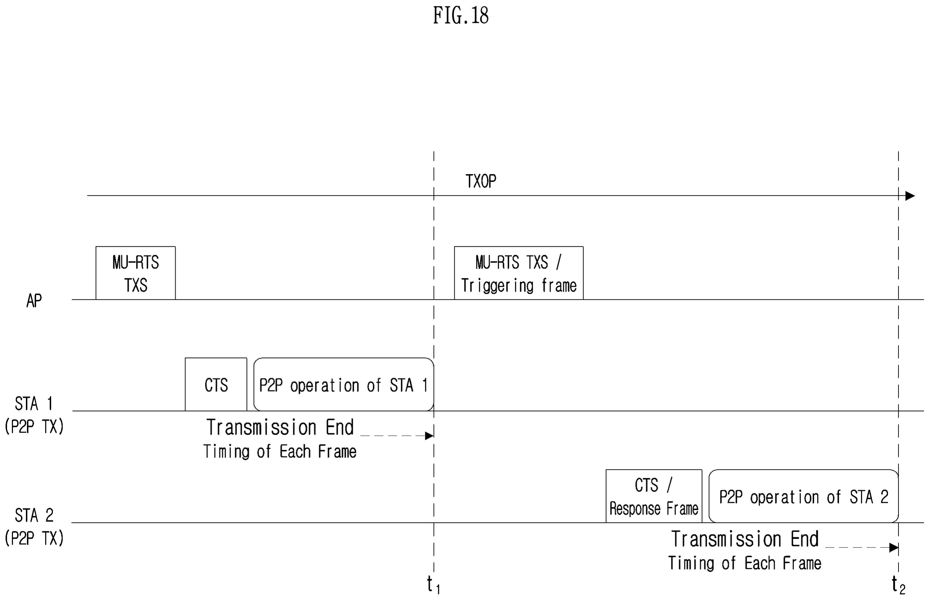

FIG. 18 illustrates another example of setting a duration of a frame according to a P2P operation according to an embodiment of the present disclosure.

Referring to FIG. 18, a duration for each frame in a P2P operation may be set from a transmission end timing of the corresponding frame to an end timing of a duration in which a frame exchange between a P2P TX STA and a P2P RX STA is performed (e.g., an end timing of the corresponding P2P operation).

For example, in a P2P operation of STA 1, a duration of a frame transmitted may be set from a transmission end timing of the corresponding frame to an end timing (t₁) of the corresponding P2P operation. For example, in a P2P operation of STA 2, a duration of a frame transmitted may be set from a transmission end timing of the corresponding frame to an emd timing (t₂) of the corresponding P2P operation.

In this regard, a P2P RX STA may set a duration of a frame to be transmitted by itself based on a duration set by a P2P TX STA.

Additionally or alternatively, the method proposed in the present embodiment may also be applied to a CTS frame/response frame transmitted by a STA that performs a first P2P operation or subsequent P2P operations including the first P2P operation.

Through the method proposed in the present embodiment, it may not occur that a frame transmitted by a P2P RX STA in a preceding P2P operation affects a subsequent P2P operation.

The method proposed in the present embodiment does not protect an entire TXOP by the AP. Therefore, in a case where a failure of frame transmission between a P2P operation or between an AP and a STA occurs in the middle, a STA in which a NAV is not set by the AP may access a channel and transmit a frame.

In the existing wireless LAN system, only one user info field is included in the trigger frame for TXOP sharing, i.e., the MU-RTS TXS trigger frame. Accordingly, time duration allocation for P2P transmission or non-TB PPDU transmission was possible only for one STA. In contrast, the proposed method in the present disclosure may include one or more user info fields, i.e., multiple user info fields, in the MU-RTS TXS trigger frame. Through this, it has a new feature that time duration allocation for P2P transmission or non-TB PPDU transmission for multiple STAs is possible with one MU-RTS TXS trigger frame. Accordingly, multiple P2P transmissions may be supported within one TXOP, and since time allocation may be performed for multiple STAs at once, signaling overhead is reduced and efficiency is improved, which may achieve new effects. Additionally, based on the NAV setting method proposed in the present disclosure, a technical effect of performing P2P transmission in a triggered TXOP sharing mode for multiple users/STAs can be achieved in any case.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, 5G system, but may be applied to various WLAN or wireless communication systems other than the IEEE 802.11-based system.

## Claims

1. A method performed by a station (STA) in a wireless LAN system, the method comprising:
receiving, from an access point (AP), a trigger frame related to sharing of a transmission opportunity (TXOP);
transmitting, to the AP, a response frame for the trigger frame; and
performing a frame exchange with other STA in a time duration allocated to the STA based on the trigger frame,
wherein a TXOP sharing mode subfield included in the trigger frame is set to a value indicating a TXOP sharing mode for allocating a time duration to perform the frame exchange between the STA and the other STA, and
wherein a duration of a frame transmitted in the time duration allocated to the STA is set based on an end timing of the TXOP or an end timing of the frame exchange.

2. The method of claim 1, wherein:
based on the duration being set according to the end timing of the frame exchange, the duration is set from a transmission end timing of the frame to the end timing of the frame exchange.

3. The method of claim 2, wherein:
for the time duration allocated to the STA, a duration of a frame transmitted by the other STA is set based on the duration of a frame transmitted by the STA.

4. The method of claim 1, wherein:
based on that, within the TXOP, a first time duration is allocated for a frame exchange between a first STA and a second STA, and a second time duration is allocated for a frame exchange between a third STA and a fourth STA after the first time duration,
a duration of a first frame transmitted in the first time duration is set from a transmission end timing of the first frame to an end timing of the frame exchange between the first STA and the second STA, and
a duration of a second frame transmitted in the second time duration is set from a transmission end timing of the second frame to an end timing of the frame exchange between the third STA and the fourth STA.

5. The method of claim 1, wherein:
based on the duration being set according to the end timing of the TXOP, the duration is set from a transmission end timing of the frame to the end timing of the TXOP.

6. The method of claim 1, wherein:
based on that, within the TXOP, a first time duration is allocated for a frame exchange between a first STA and a second STA, and a second time duration is allocated for a frame exchange between a third STA and a fourth STA after the first time duration,
the first STA corresponds to a STA that receives, from the AP, a first frame triggering the frame exchange with the second STA, and
the third STA corresponds to a STA that receives, from the AP, a second frame triggering the frame exchange with the fourth STA.

7. The method of claim 6, wherein:
the third STA is configured to update an Intra-BSS NAV, which is based on a transmitting address (TA) for a frame transmitted from the first STA, to a NAV set based on the frame transmitted from the first STA, within the first time duration.

8. The method of claim 6, wherein:
the third STA is configured to check a TA for a frame transmitted from the first STA, based on the frame exchange between the first STA and the second STA.

9. The method of claim 6, wherein:
based on a receiving address (RA) of a frame transmitted from the second STA being identical to a TA of a frame transmitted from the first STA,
the third STA sets and ignores a Basic NAV based on a frame transmitted from the second STA, or
the third STA is configured not to set a Basic NAV based on a frame transmitted from the second STA.

10. The method of claim 9, wherein:
the first STA and the third STA are STAs within coverage of a first BSS to which the AP belongs, and
the second STA is a STA within coverage of a second BSS different from the first BSS.

11. The method of claim 6, wherein:
based on address information of the second frame including a MAC address of the first STA, the second frame further includes information indicating whether to reset a network allocation vector (NAV).

12. The method of claim 1, wherein:
the trigger frame corresponds to a multiple user-request to send (MU-RTS) TXOP sharing (TXS) trigger frame, and
the response frame corresponds to a clear to send (CTS) frame for the MU-RTS TXS trigger frame.

13. The method of claim 12, wherein:
the STA is an associated STA with the AP or is an STA within coverage of a BSS to which the AP belongs.

14. An apparatus for a station (STA) in a wireless local area network (WLAN) system, the apparatus comprising:
at least one transceiver; and
at least one processor connected to the at least one transceiver,
wherein the at least one processor is configured to:
receive, from an access point (AP), a trigger frame related to sharing of a transmission opportunity (TXOP);
transmit, to the AP, a response frame for the trigger frame; and
perform a frame exchange with other STA in a time duration allocated to the STA based on the trigger frame,
wherein a TXOP sharing mode subfield included in the trigger frame is set to a value indicating a TXOP sharing mode for allocating a time duration to perform the frame exchange between the STA and the other STA, and
wherein a duration of a frame transmitted in the time duration allocated to the STA is set based on an end timing of the TXOP or an end timing of the frame exchange.

15. A processing unit configured to control a station (STA) in a wireless local area network (WLAN) system, the processing unit comprising:
at least one processor; and
at least one computer memory operably connected to the at least one processor, and based on being executed by the at least one processor, storing instructions for performing a method according to any one claim of claims 1 to 13.

16. At least one non-transitory computer-readable medium storing at least one instruction, wherein:
the at least one instruction controls a device to perform a method according to any one claim of claims 1 to 13 in a wireless local area network (WLAN) system by being executed by at least one processor.

17. A method performed by an access point (AP) in a wireless LAN system, the method comprising:
receiving, to a plurality of stations (STAs), a trigger frame related to sharing of a transmission opportunity (TXOP); and
receiving, from one or more STAs among the plurality of STAs, a response frame for the trigger frame,
wherein a TXOP sharing mode subfield included in the trigger frame is set to a value indicating a TXOP sharing mode for allocating a time duration to perform the frame exchange between the STA and the other STA, and
wherein a duration of a frame transmitted in the time duration allocated to the STA is set based on an end timing of the TXOP or an end timing of the frame exchange.

18. An apparatus for an access point (AP) in a wireless local area network (WLAN) system, the apparatus comprising:
at least one transceiver; and
at least one processor connected to the at least one transceiver,
wherein the at least one processor is configured to:
receive, to a plurality of stations (STAs), a trigger frame related to sharing of a transmission opportunity (TXOP); and
receive, from one or more STAs among the plurality of STAs, a response frame for the trigger frame,
wherein a TXOP sharing mode subfield included in the trigger frame is set to a value indicating a TXOP sharing mode for allocating a time duration to perform the frame exchange between the STA and the other STA, and
wherein a duration of a frame transmitted in the time duration allocated to the STA is set based on an end timing of the TXOP or an end timing of the frame exchange.
